# EUROPEAN PATENT APPLICATION

(11) **EP 3 636 969 A1**
(43) Date of publication of application: **15.04.2020**
(21) Application number: 18199838.6
(22) Date of filing: 11.10.2018
(51) Int. Cl.: F16K 1/48, F16K 1/36, F16K 27/02, F16K 25/00, F16K 11/044, F16K 31/50, F16K 24/04, F24D 19/08

(54) **VALVE**

(71) Applicant: Danfoss A/S, 6430 Nordborg (DK)
(72) Inventor: Clausen, Anders Østergaard, 6430 Nordborg (DK)
(74) Representative: Patentanwälte Olbricht Buchhold Keulertz

(57) **Abstract**

The invention relates to a valve (1) in particular for use in a heating or cooling circuit. The valve has a valve housing (2) comprising at least one inlet (3, 3') and at least one outlet (4, 4') which are connected to each other via a channel (10). A valve element (7) is movable between an open position and a closed position for controlling a flow through the channel (10). The valve element (7) comprises a valve inner part (11) and a valve outer part (12), which are made of different plastic materials.

## Description

The invention relates to a valve, in particular for use in a heating or cooling circuit. The valve comprises a valve housing including at least one inlet and at least one outlet, which are connected to each other via a channel, wherein a valve element is movable between an open position and a closed position for controlling a flow through the channel of the valve.

Such a valve might be arranged in a supply line and / or return line of a heat exchanger like a radiator. By means of the valve, a desired flow rate can be set. This is achieved by positioning the valve element such that a flow cross section of the channel is more or less open or completely blocked.

Such valves are usually made of copper. Copper is readily available and has a high corrosion resistance. However, copper is relatively heavy and expensive.

EP 3 193 065 A1 discloses a valve having a valve housing made of copper and a valve cover made of a plastic material. The valve cover is permanently connected with the valve housing via a snap-in connection. The remaining elements of the valve, in particular the valve element, are made of copper.

It is an object of the invention to provide a valve that is easy to produce at a low price.

This object is solved by a valve having the features of claim 1. Advantageous embodiments can be found in the dependent claims.

According to the invention, the valve of the aforementioned type comprises a valve element having a valve inner part and a valve outer part, which are made of different plastic materials.

As a result of this solution, no metal, in particular no copper, is required for the production of the valve element. Instead, a cheaper material, namely plastic, is used. Such plastic components can be inexpensively manufactured in large quantities, for example by injection molding technologies. By using different plastic materials for the valve inner part and the valve outer part, which together form the valve element, cheaper material can be used for some parts. For the valve inner part a plastic material is required that can withstand not only high temperatures, but also is resistant to a medium flowing through the valve. In contrast, the valve outer part can be produced with a less expensive plastic material, which does not have to meet the requirements of high temperature resistance for example. A further saving compared to valve elements made of copper results from the ease of processing and the freedom regarding possible designs. So corresponding sealing surfaces may be formed integrally with the valve inner part, for example, wherein no post-processing is required. Thus, the manufacturing costs can be reduced by a multi-part construction of the valve element with a valve inner part and a valve outer part made of different plastic materials.

It is particularly preferred that a valve seat is formed in the channel, wherein the valve inner part cooperates with the valve seat. With a valve seat integrated into the valve housing a good adjustment of the flow quantity can be achieved.

It is particularly preferred that the valve inner part has a sealing ring at its end facing the valve seat. If the valve is completely closed and the valve element bears against the valve seat, the sealing ring is pressed against the valve seat. Thus, a high water tightness is achieved even at higher internal pressure. If the valve is partially closed, the sealing ring does not influence the flow conditions because it is arranged in an end region of the valve inner part facing the valve seat and not in a region passed by the flow.

In a preferred development, the valve housing has a valve access geometry with a smooth-cylindrical inside, in which the valve element is guided. The valve access geometry encompasses the valve element and provides room for the movement of the valve element. The valve element can be guided directly on the smooth cylindrical inner side of the valve access geometry without the need of additional elements.

Advantageously the valve inner part and the valve outer part are interconnected via a snap-in connection. Such a connection can be produced by components of plastic materials with little effort and does not need additional fixing elements. In general, a part of an assembly expands elastically until it engages with a corresponding recess of the other part. This results in a permanent, stable connection. The use of plastic materials for the valve inner part and the valve outer part results in a sufficient material elasticity. Therefore, a snap-in connection can be realized without difficulty.

Preferably, the valve inner part and the valve outer part each have a free interior, wherein the valve inner part has a closed end face. The valve inner part and the valve outer part are not formed as a solid body, but in a shape that is similar like pipes. Accordingly, material and thus weight and costs can be saved.

In a preferred embodiment, one end of the valve inner part is inserted into the valve outer part. This results in a stable connection. Further, the snap-in connection can be realized relatively easy.

It is particularly preferred that the valve outer part has a stop on the inside that limits an insertion depth of the valve inner part. The position of the valve inner part with respect to the valve outer part is thus clearly defined. Establishing the snap- in connection of the valve inner part with the valve outer part is thus easily possible. Pushing the valve inner part to far into the valve outer part is prevented and thus always a defined length of the valve element is achieved.

Preferably, a radial seal is arranged on the valve inner part in an area adjacent to the valve outer part. This radial seal seals between the valve inner part and the inside of the valve access geometry and prevents fluid from reaching the valve outer part. The valve outer part therefore is not exposed to the fluid, so that the plastic material of the valve outer part does not need to meet high requirements.

Preferably, the radial seal is held in a groove that is formed between a radially outwardly projecting collar of the valve inner part and an end face of the valve outer part. The axial position of the radial seal on the valve element is thus clearly defined and a misalignment of the radial seal upon movement of the valve element is prevented.

In a preferred embodiment, at least the valve access geometry is provided with a valve cover, which in particular has a removable cap. The valve cover protects the valve body from mechanical influences and provides additional functionality. In this case, the valve cover engages with the valve housing by means of projections interfering with a protrusion extending around the valve access geometry. Thus, the valve cover is securely connected by form fit with the valve housing. The removable cap prevents unintentional access to the valve element and further protects it against external influences. Further, it provides a homogeneous appearance. If needed for example to adjust the position of the valve element, the cap can be removed without any tools.

In a preferred embodiment, the cap is designed as a rotary handle and is connected in a nonrotating manner to the valve element, in particular to the valve outer part. Thus, the position of the valve element and thus the free flow cross-section of the channel can be easily adjusted from the outside.

Preferably, the valve cover has an extension that is in alignment with the valve access geometry, wherein the extension is in particular formed as a hollow cylinder. The valve outer part is guided in an axially movable manner in the interior of the extension. The extension provides additional space for the movement of the valve element. In addition, the extension also might provide a functional task, namely for adjustment of the valve element, because a thread pairing is formed between the valve outer part and the extension of the valve cover. Forming the internal thread into the extension is much easier and less expensive than forming a thread in the valve housing because the extension as well as the entire valve cover is usually made of a plastic material and the internal thread can be integrated in it by injection molding for example. The internal thread of the extension interacts with an external thread formed in the valve outer part. A rotation of the valve outer part then causes a longitudinal movement of the valve element and thus an adjustment of the free flow cross-section.

In a preferred embodiment, an inner valve body is arranged in the interior of the valve inner part, which closes a passage to the interior of the valve outer part in a closed position and releases the passage in an open position, wherein the valve body is held by a spring element in the closed position. The inner valve body thus acts as a check valve, which is held not only by the spring element, but also by the pressure of the fluid in the valve channel. By applying an appropriate pressure, the valve body can be moved inwards and thus opens the passage. This might be done for example if a venting of a heating system needed.

It is preferred that at least one aperture is formed in a circumferential wall of the valve inner part. Through this aperture, liquid and/or air from the channel may enter into the interior of the valve inner part. From there is comes to the interior of the valve outer part by passing the inner valve body if this is in an open position.

Preferably, the inner valve body abuts in the closed position to a rim of the valve outer part, which surrounds an end-side passage to the interior of the valve outer part. Thus, the valve body can be positioned in the valve inner part before inserting the end of the valve inner part into the valve outer part. By latching the valve outer part with the valve inner part the valve body is then held securely inside the valve inner part.

Preferably, an annular seal is arranged between the inner valve body and the valve inner part. This minimizes the risk of leakage even at higher pressures.

Advantageously, an axial force on the inner valve body for moving it into the open position can be introduced through the interior of the valve outer part and the passage. A pressure might be exerted on the outer surface of the valve body that is reachable through the passage, whereby the valve body is moved counter to the spring force into the open position by this pressure. As a result, liquid or air can flow out of the channel of the valve. For a comfortable handling, a special drain tool can be provided.

In a preferred further development, the valve housing has two parallel channels, each having an inlet and an outlet, wherein each channel comprises a valve element. Such a configuration, which is also referred to as H-piece, is used for connecting a flow line and a return line to a heat exchanger, such as a radiator. In this case, the respective channel encompassing parts of the valve housing are connected to each other via a bar. Further, one of the valves can be provided with an inner valve body in order to provide an easy venting of the heating system, while the other valve element is formed only by the valve inner part and the valve outer part.

In a preferred embodiment, a temperature-dependent thermocouple element acts in the closing direction on the valve element. Thus, an automatic equalization of the valve position in relation to an ambient temperature is achieved. For example, a throttling of the flow occurs at warmer temperatures, while at colder temperatures, the valve element is moved towards the open position, in particular by means of a spring force, so that a heat exchanger like a radiation is supplied with more heat energy.

An inventive drain tool is provided that helps to apply a pressure on the inner valve body for a valve of the type as described above. The drain tool comprises a tool housing with a cylindrical insertion portion and an actuating pin coaxially disposed therein. Through the cylindrical insertion section, which can be inserted into the extension of the valve cover and has a corresponding size, the actuating pin is guided directly to the inner valve body. This eliminates the need for time-consuming positioning and the valve body is securely pressed inwards against the spring force.

It is preferred that an axial position of the actuating pin is adjustable via a rotary handle. By means of the rotary handle the protrusion of the actuating pin protrudes out of the tool housing can be adjusted. A rotational movement represents a simple setting possibility, which is usually self-locking. The actuating pin thus reliably maintains its position.

Preferably, a frontally open annular space is formed between the actuating pin and the insertion portion. The annular space is connected through the tool housing with an outlet. A medium flowing through the valve and entering the tool through the passage of the outer valve part may then be passed within the tool housing to the outlet and discharged there. Thus, a comfortable venting can is provided.

In a preferred embodiment, a collar surrounds the insertion section, wherein the valve access geometry and / or the extension of the valve cover is at least partially receivable between the insertion section and the collar. The drain tool is secured at the vent by means of this collar thus minimizing the risk of operating errors.

Further features, details and advantages of the invention will become apparent from the wording of the claims and from the following description of exemplary embodiments with reference to the drawings. They show:
Fig. 1 a valve in spatial view,
Fig. 2 a section through a valve in the open position,
Fig. 3 a section through the valve according to Fig. 2 in a closed position,
Fig. 4 a section through a valve with an additional inner valve body in the open position,
Fig. 5 a section through the valve of Figure 4 in the closed position,
Fig. 6 a drain tool,
Fig. 7 a section through a drain tool connected to the valve and
Fig. 8 a valve embodied as an H-piece valve.

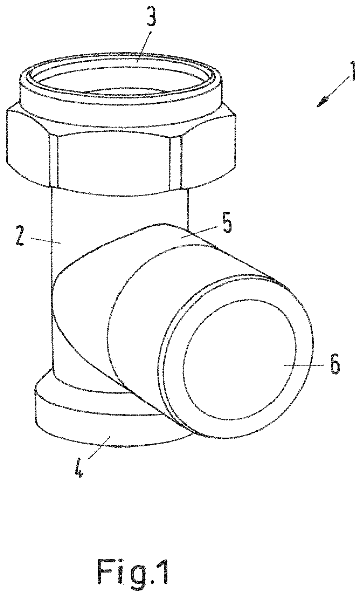

Fig. 1 shows a valve 1 having a valve housing 2 made of copper. However any other metal may be suitable. The valve housing 2 has an inlet 3 and an outlet 4, which are in fluid communication with each other via a channel formed in the valve housing 2. Further, the valve 1 comprises a valve element (not shown in Fig. 1) for adjusting the flow through the channel from the inlet 3 to the outlet 4. The valve member is guided in a valve access geometry formed by a cylindrical extension of the valve housing 2 and extending substantially perpendicular to the channel. This valve access geometry is covered with a valve cover 5 comprising a cap 6.

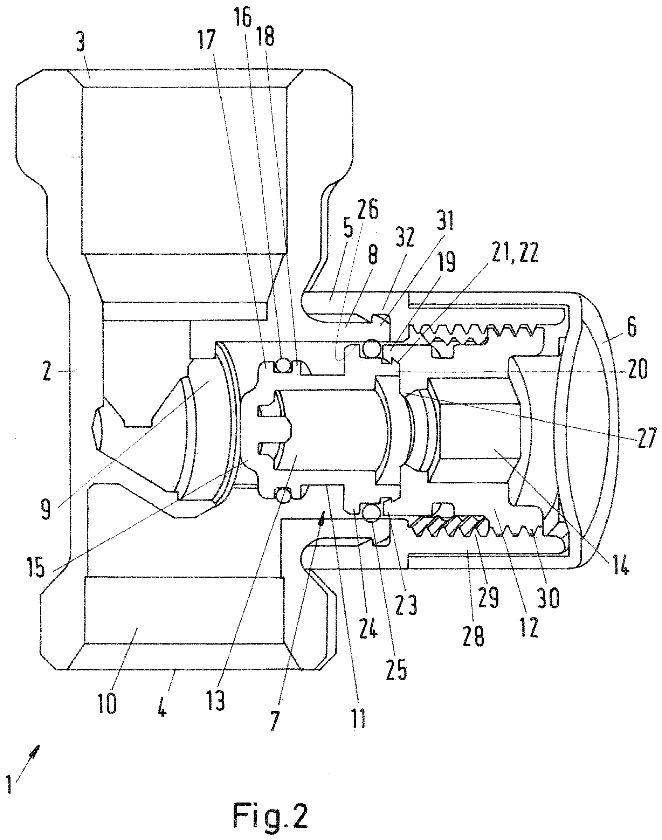

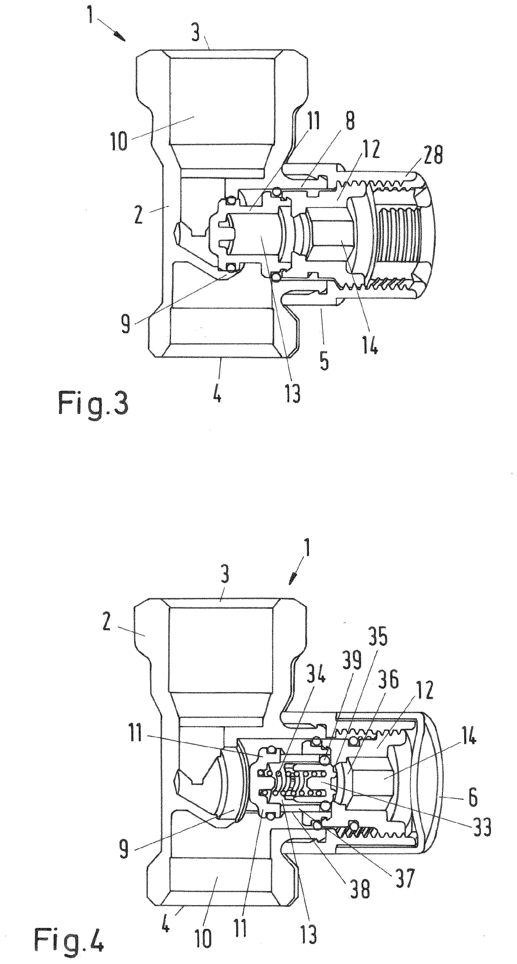

In Fig. 2, the valve 1 is shown in a sectional view. The valve element 7 is movable linearly in the valve access geometry 8 between an open position, as shown in FIG. 2, and a closed position, as shown in Fig. 3. The valve element 7 can take all intermediate positions as well. This allows the control of a current flow through the valve 1, such as a heating or cooling fluid. The valve element 7 interacts with a valve seat 9, which is integrated into the valve housing 2 within the channel 10.

The valve element 7 is composed of several parts and has a valve inner part 11 and a valve outer part 12, which are non-detachably linked via a snap-in connection. Instead of the snap-in connection other variants of permanent connection may be used like welding or gluing for example. An end of the valve inner part 11 extends into the valve outer part 12. The valve inner part 11 is extended by the valve outer part 12, wherein only the valve inner part 11 is exposed to the medium flowing through the channel 10 of the valve 1. Accordingly, the valve outer part 12 is exposed to lower temperatures than the valve inner part 11. Therefore, the valve outer part 12 is formed by a plastic material that is less temperature stable and cheaper than the plastic material of the valve inner part 11.

The valve inner part 11 and the valve outer part 12 each have a free interior 13, 14. In other word they are more or less a shaped like pipes. However, the valve inner part 11 has a closed front side 15 at the end that faces the valve seat 9. Because of the free interior 13, 14 the valve inner part 11 and the valve outer 12 can be made with relatively small amount of material and accordingly relatively light weight and cheap.

On its outer circumferential surface, the valve inner part 11 has a sealing ring 16 that is arranged in the region that comes into contact with the valve seat 9. In this case, for the positioning of the sealing ring 16 two circumferential, radially outwardly projecting collars 17, 18 are provided. The sealing ring 16 is received between these collars 17, 18. The sealing ring 16 acts in the closed position, as shown in Figure 3, with the valve seat 9, thus ensuring a tight closure of the channel 10.

The valve inner part 11 and the valve outer part 12 are connected to each other via a snap-in connection 19. Therefor the end 20 of the valve inner part 11 is inserted into the valve outer part 12, wherein the valve outer part 12 has a radially inwardly facing projection 21 that engages in a groove 22 formed into the valve inner part 11. As a result, the valve outer part 12 and the valve inner part 11 are positively connected with each other.

A radial seal 25 is arranged between a front face 23 of the valve outer part 12 and a circumferential collar 24 of the valve inner part 11. The radial seal 25 acts between the valve element 7 and the cylindrical inner side 26 of the valve access geometry 8.

An insertion depth of the valve inner part 11 in the valve outer part 12 is limited by a peripheral stop 27 that projects into the interior 14 of the valve outer part 12. The valve inner part 11 is in the right position if the end 20 of the valve inner part 11 abuts against the stop 27.

The valve cover 5 has an extension 28 that elongates the valve access geometry 8. In the extension 28 an internal thread 29 is formed that cooperates with an external thread 30 formed at the valve outer part 12. By rotation the valve outer part 12, the valve element 7 moves between the closed position, as shown in Figure 3, and the open position, as shown in Figure 2, wherein any interim position can be set.

For rotating the valve element 7, the interior 14 of the valve outer part 12 has a polygonal contour, which can be accessed with a corresponding tool to introduce a torque. In principal different shapes of the contour can be used as well.

The valve cover 5 is attached to the valve housing 2 via a snap connection. A projection 31 is formed at one end of the valve access geometry 8. The projection interacts with a corresponding configuration 32 of the valve cover 5 in order to connect the valve cover 5 in form fit with the valve housing 2.

An access to the interior 14 of the valve outer part 12 is prevented by the removable cap 6 of the valve cover 5. Therefore, an unintended manipulation of the valve 1 is difficult. Furthermore, the risk of contamination of the interior 13, 14 is minimized.

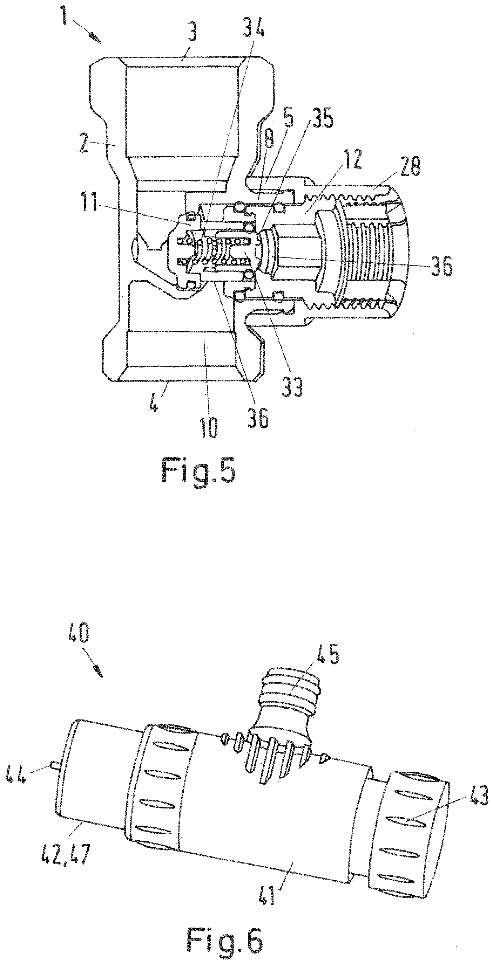

Figs. 4 and 5 show a valve 1 that corresponds substantially to the embodiment according to Figs. 2 and 3. Accordingly, the same reference numerals are used for corresponding elements. In addition to the embodiments shown in Figs. 2 and 3, an inner valve body 33 is arranged in the interior 13 of the valve inner part 11. A spring element 34 acts on the inner valve body 33 towards the valve outer part 12. In this case, the inner valve body 33 is biased against a rim 35 of the valve outer part 12, which surrounds a passage 36. The rim 35 thus acts as a valve seat for the inner valve body 33. The spring member 34 holds the inner valve body 33 in the closed position.

An aperture 38 is formed in a peripheral wall 37 of the valve inner part 11. A medium flowing in the channel 10 can enter the interior 13 through the aperture 38.

A ring seal 39 is arranged between the inner valve body 33 and the valve inner part 11. The ring seal 39 is held between the valve inner part 11 and the valve outer part 12. The ring seal 39 prevents liquid of intruding into a slit between the inner valve body 33 and the valve inner part 11 and thus increases the tightness of the valve 1.

The inner valve body 33 must be moved away from the rim 35 in order to open the passage 36. For this purpose, an axially acting force should be exerted on the inner valve body 33 against the force of the spring element 34. This force is introduced from the outside through the interior 14 of the valve outer part 12.

A drain tool 40 as shown in Fig. 6 can be used for this purpose. The drain tool 40 comprises a substantially pipe-shaped tool housing 41 having an insertion portion 42 at one end and a rotary handle 43 at the other end. The axial position of an actuating pin 44 can be set by means of the rotary handle 43. If the drain tool 40 is attached at the valve 1, the end of the actuating pin 44 comes in contact with the inner valve body 33. As a result, liquid and / or air can pass from the channel 10 into the drain tool 40 and can be discharged via an outlet 45 of the drain tool 40. The outlet 45 may have a connection geometry for fastening a hose or a pipe.

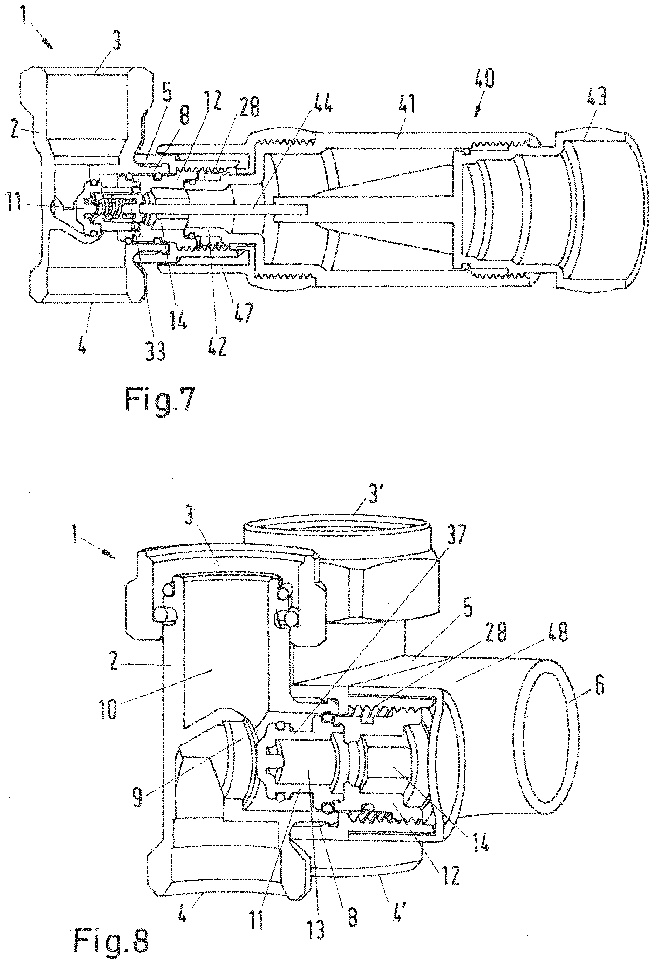

FIG. 7 shows in a sectional view the valve 1 with the drain tool 40 attached. An insertion portion 42 of the drain tool 40 is inserted within the extension 28 and the valve outer part 12. The drain tool 40 is sealed relative to the valve outer part 12 by a sealing element 46. The actuating pin 44 pushes the inner valve body 33 inwards by rotating the handle 43. To achieve a stable join of the drain tool 40 with the valve 1, the extension 28 of the valve cover 5 is surrounded by a collar 47 of the drain tool 40.

The actuating pin 44 is firmly connected to the handle 43. By turning on the handle 43, the actuating pin 44 is moved relative to the tool housing 41 in the direction towards the valve 1, whereby the inner valve body 33 is lifted from the rim 35. Thus, the passage 36 is released, which can be used for venting of, for example, a heating system in which the valve 1 is installed.

Fig. 8 shows an embodiment of the valve 1, in which the valve 1 is configured as an H-piece with two parallel channels 10 and, accordingly, two inlets 3, 3' and two outlets 4, 4'. One of the channels may be assigned to a supply line and the other channel to a return line of a heating system. Between the channels and the associated valve access geometries, a bar 48 is provided, so that the valve housing 2 is shaped like an H. The valve elements 7 may both be the same, but it is preferable to provide one of the valve elements 7 with an inner valve body 33 to allow venting of a heating system in which the valve 1 is installed. The main structure of the valve of fig. 8 corresponds to the embodiments described above.

The invention is not limited to one of the above-described embodiments, but can be modified in many ways. In particular, the shape of the valve housing is not limited to the illustrated shape. It is important, however, that the valve element comprises at least two parts made of different plastic materials. This has the benefit to produce only the valve inner part of a temperature stable plastic, while the valve outer part can be formed by a less temperature stable plastic, which might be significantly cheaper. Further, it is possible to combine differently shaped valve outer parts and valve inner parts depending on the proposed application. For example, the valve outer part has always the same design, while the valve inner part is offered in a first design having an additional aperture for the use with an inner valve body and in a second design having a closed circumferential wall.

All of the claims features and advantages resulting from the description and the drawings, including design details, spatial arrangements and method steps may be essential to the invention both in itself and in a variety of combinations.

### List of reference numbers

- 1: valve
- 2: valve housing
- 3: inlet
- 4: outlet
- 5: valve cover
- 6: cap
- 7: valve element
- 8: valve access geometry
- 9: valve seat
- 10: channel
- 11: valve inner part
- 12: valve outer part
- 13: interior
- 14: interior
- 15: front side
- 16: sealing ring
- 17: collar
- 18: collar
- 19: snap-in connection
- 20: end
- 21: projection
- 22: groove
- 23: front face
- 24: collar
- 25: radial seal
- 26: inner side
- 27: stop
- 28: extension
- 29: internal thread
- 30: external thread
- 31: projection
- 32: corresponding configuration
- 33: inner valve body
- 34: spring element
- 35: rim
- 36: passage
- 37: peripheral wall
- 38: aperture
- 39: ring seal
- 40: drain tool
- 41: tool housing
- 42: insertion portion
- 43: rotary handle
- 44: actuating pin
- 45: outlet
- 46: sealing element
- 47: collar
- 48: bar

## Claims

1. Valve (1), in particular for a heating or cooling circuit, having a valve housing (2) comprising at least one inlet (3, 3') and at least one outlet (4, 4') which are connected to each other via a channel (10), wherein a valve element (7) is movable between an open position and a closed position for controlling a flow through the channel (10), **characterized in that** the valve element (7) comprises a valve inner part (11) and a valve outer part (12), which are made of different plastic materials.

2. Valve according to claim 1, **characterized in that** a valve seat (9) is formed in the channel (10), wherein the valve inner part (11) cooperates with the valve seat (9).

3. Valve according to claim 1 or 2, **characterized in that** the valve housing (2) has a valve access geometry (8) with a smooth cylindrical inside, wherein the valve element (7) is guided at the inside of the valve access geometry (8).

4. Valve according to at least one of the preceding claims, **characterized in that** the valve inner part (11) and the valve outer part (12) are connected via a snap-in connection.

5. Valve according to at least one of the preceding claims, **characterized in that** the valve inner part (11) and the valve outer part (12) each have a free interior (13, 14), wherein the inner valve member (11) has a closed front side (15).

6. Valve according to at least one of the preceding claims, **characterized in that** a radial seal (25) is held in a groove (22) between a radially outwardly projecting collar (24) of the valve inner part (11) and a front face (23) of the valve outer part (12).

7. Valve according to at least one of the preceding claims, **characterized in that** a valve cover (5) covering at least the valve access geometry (8) has an extension (28) which is in alignment with the valve access geometry (8), wherein the extension (28) is in particular formed as a hollow cylinder.

8. Valve according to claim 7, **characterized in that** an internal thread (29) is formed in the extension (28), wherein the internal thread (29) interacts with an external thread (30) of the valve outer part (12).

9. Valve according to at least one of the preceding claims, **characterized in that** an inner valve body (33) is arranged in the interior (13) of the valve inner part (11), wherein the inner valve body (33) closes a passage (36) to the interior (14) of the valve outer part (12 ) in a closed position and releases the passage (36) in an open position, wherein the valve body (33) is held in the closed position by a spring element (34).

10. Valve according to claim 9, **characterized in that** the inner valve body (33) abuts in the closed position to a rim (35) of the valve outer part (12), wherein the rim (35) surrounds an end-side passage (36) to the interior (14).

11. Valve according to one of claims 9 or 10, **characterized in that** an axial force can be exerted on the inner valve body (33) through the interior (14) of the valve outer part (12) and the passage (36).

12. Valve according to at least one of the preceding claims, **characterized in that** the valve housing (2) has two parallel channels (10) each having an inlet (3, 3 ') and an outlet (4, 4'), wherein each channel (10) comprises a valve element (7).

13. Valve according to at least one of the preceding claims, **characterized in that** a thermocouple element acts on the valve element in the closing direction.

14. Drain tool (40) for pushing the inner valve body (33) of a valve (1) according to one of claims 13 to 17, **characterized in that** the drain tool (40) comprises a tool housing (41) having a cylindrical insertion portion (42) and an actuating pin (44) coaxially disposed therein.

15. Drain tool (40) according to claim 14, **characterized in that** the position of actuating pin (44) is adjustable via a rotary handle (43).

16. Drain tool (40) according to one of claims 14 or 15, **characterized in that** the insertion portion (42) is surrounded by a collar (47), wherein the valve access geometry (8) and / or the extension (28) of the valve cover (5) is at least partially receivable between the insertion section (42) and the collar (47).
